# EUROPÄISCHE PATENTSCHRIFT

(11) **EP 2 818 607 B1**
(45) Veröffentlichungstag und Bekanntmachung des Hinweises auf die Patenterteilung: **01.03.2017**
(21) Anmeldenummer: 13003272.5
(22) Anmeldetag: 27.06.2013
(51) Int. Cl.: E04C 2/16, G01B 7/16, G01N 31/22

(54) **Holzwerkstoffplatte mit Indikator**
Composite wood board with an indicator
Plaque en matériau dérivé du bois avec indicateur

(43) Veröffentlichungstag der Anmeldung: 31.12.2014
(73) Patentinhaber: Flooring Technologies Ltd., Pieta PTA 9044 (MT)
(72) Erfinder: Kalwa, Norbert, 32805 Horn-Bad Meinberg (DE); Güßloff, Jens, 17213 Malchow (DE)
(74) Vertreter: Rehmann, Thorsten

(56) Entgegenhaltungen:
- EP-A1- 2 452 829
- EP-A1- 2 537 653
- DE-A1- 10 128 807
- US-A- 4 175 207
- US-A- 4 304 135
- US-A- 4 421 719
- GOGATEC GMBH: "GOGAMARK SIGNS TMS", , 1. Januar 2013 (2013-01-01), XP002719235, Gefunden im Internet: URL:http://www.gogatec.com/picts/pdfs/KENN /TMS.pdf [gefunden am 2013-01-24]

## Beschreibung

Die Erfindung betrifft eine Holzwerkstoffplatte mit einer Oberseite und einer Unterseite.

Solche Platten werden als Bauplatten mit einem Kern aus Holzspänen oder Holzfasern hergestellt. Sie können unbeschichtet, einseitig oder beidseitig beschichtet sein. OSB-Platten werden beispielsweise für den Hausbau eingesetzt. Beschichtete Verkleidungsplatten mit einem Kern aus Holzspänen oder Fasern werden für Boden-, Wand- oder Deckenverkleidung verwendet. Beschichtete plattenförmige Möbelprodukte mit einem Kern aus Holzspänen oder Holzfasern werden in der Möbelindustrie, beispielsweise als Arbeitsplatten verwendet. Holzfaserdämmplatten werden im Hausbau als Dämmmaterialien verwendet.

Diese Produkte sind - auch wenn die Holzfasern oder Holzspäne mit einem Kunstharz beleimt und dann zur Plattenbildung miteinander verpresst wurden - ökologisch hochwertige Produkte basierend auf natürlichen Fasern oder Spänen aus Holz. Sie unterliegen Veränderungen durch Umwelteinflüsse. Eine Holzwerkstoffplatte quillt, wenn sich die Luftfeuchtigkeit, der sie ausgesetzt ist, erhöht und schrumpft, wenn sich die Luftfeuchtigkeit reduziert. Nach dem Verlassen des Herstellwerkes müssen die Produkte vielfach lange Transportwege zurücklegen, bis sie für die Nutzung beim Endkunden bereitstehen. Dabei können häufig Bedingungen in Bezug auf Temperatur, Feuchte, Druck usw. auftreten, die die Produkte noch vor ihrer eigentlichen Nutzung schädigen. Wenn die Holzwerkstoffplatte, beispielsweise als Fußbodenpaneele, in Containern auf dem Seeweg transportiert wird, unterliegt sie einer Kombination von Feuchte, Temperatur und mechanischer Beanspruchung, die aus dem Schlingern des Schiffes über Wochen resultiert. Dabei können selbst hochwertige Produkte geschädigt werden.

Auch bei der Nutzung der Produkte an sich können durch ungünstige Bedingungen Schäden entstehen. Dies gilt besonders für Produkte, die direkt durch die schädigende Beanspruchung bzw. durch die Einwirkung Änderungen in ichren Produkteigenschaften Verfahren. Bei erhöhter Luftfeuchtigkeit oder direkter Wassereinwirkung erleiden Produkte aus Holz oder Holzwerkstoffen unter Umständen irreversible Schäden, deren Ursache aber nachträglich nur schwer einschätzbar oder nachweisbar ist. Fußböden, die aus Laminatpaneelen hergestellt sind können bei falscher Nutzung oder Pflege Schäden nehmen. Dasselbe gilt für Möbel. Die Produkte sind objektiv fehlerhaft, die Ursache des Fehlers lässt sich vielfach aber nicht feststellen.

Aus der DE 101 28 807 A1 sind Spanplatten bekannt, die mit Indikatoren für Nässe und/oder zu hohe Gasfeuchtigkeit ausgerüstet sind. Als Indikatorsubstanzkomponenten sind Farbkomplexbildner-Stoffgruppen genannt.

Die US 4,175,207 A offenbart ein Hygrometer, mit dem Luftfeuchtigkeitsänderungen mittels farblicher Kristalle von blauschwarz bis brillantweiß (oder umgekehrt) visualisiert werden können.

In der US 4,304,135 A ist ein Messgerät beschrieben, mit dem Spannungsunterschiede an einer Offshore-Plattform ermittelt werden können und mittels dessen ein Signal ausgegeben werden kann, wenn bestimmte Werte überschritten werden.

Die US 4,421,719 A offenbart Farbindikatoren, mit denen toxische Substanzen in Fluiden sichtbar gemacht werden können. Diese Indikatoren sind blattförmig ausgebildet.

Von dieser Problemstellung ausgehend soll eine Möglichkeit geschaffen werden, zu erkennen, ob die Kräfte bzw. Drücke, denen eine Holzwerkstoffplatte über eine bestimmte Zeit ausgesetzt war, zu einer Schädigung der Holzwerkstoffplatte geführt haben, bzw. im Schadensfalle feststellen zu können, auf welche Ursache der Schaden zurückgeführt werden kann.

Zur Problemlösung zeichnet sich eine gattungsgemäße Holzwerkstoffplatte durch mindestens einen an der Holzwerkstoffplatte angebrachten Indikator zur Visualisierung einer erfolgten Zustandsänderung der Holzwerkstoffplatte unter Einwirkung wenigstens einer mechanischen Kraft, der durch eine strukturierte Metallfolie und eine lackierte Folie gebildet wird, die aufeinanderliegend angeordnet sind.

Die Folien können vorzugsweise in einem Behältnis aufgenommen sein.

Das Behältnis besteht vorzugsweise aus einem biegeschlaffen Material. Werden auf die Platte einwirkende Kräfte (Drücke) zu hoch, prägt sich die Struktur der Metallfolie in den Lack der darüber liegenden Folie ein. Je nach Tiefe der eingepressten Struktur kann auf die Höhe des Druckes bzw. die Länge der Druckeinwirkung geschlossen werden. Durch die gewählte Härte des Lackes können Drücke/Kräfte in einer bestimmten Höhe toleriert werden, ohne dass die Strukturen der Metallfolie in den Lack eingepresst werden. Beispielsweise kann die Härte des Lackes so hoch gewählt werden, dass drei übereinandergestapelte Paletten keine Veränderung an der Lackfolie der untersten Platte im Stapel erkennen lassen.

Neben einem Indikator zur Visulisierung der Einwirkung einer mechanischen Kraft auf die Holzwerkstoffplatte können auch Indikatoren zur Visualisierung einer Zustandsänderung durch eine Feuchtigkeitseinwirkung, eine Temperatureinwirkung und/oder eine Begasung der Umgebung der Holzwerkstoffplatte vorgesehen sein.

Der Indikator visualisiert vorzugsweise nur den Maximalwert, den die Einflussgröße durch eine oder mehrere Veränderungen angenommen hat, seit seinem Anbringen an die Holzwerkstoffplatte.

Der Indikator zur Visualisierung der Feuchtigkeitseinwirkung ist vorzugsweise ein Kieselgel mit mindestens einem Metallsalz, das in einem Behältnis mit einer definierten Wasserdampfdurchlässigkeit aufgenommen und an der Unterseite der Holzwerkstoffplatte angeordnet ist.

Zur Ermittlung der Feuchtigkeit kann als Indikator ein streifenförmiges Material mit einer Beschichtung aus Kieselgel oder mindestens einem Metallsalz verwendet werden. Das Material kann ein Gewebe oder Pappstreifen sein. Mit Zunahme der Feuchtigkeit, die auf den Indikator einwirkt, verändert dieser dann vorzugsweise seine Farbe.

Das Behältnis kann ein Kunststoffbeutel, insbesondere ein Beutel aus Polyethylen sein.

Wenn eine längere Zeit Feuchtigkeit (Wasser) und/oder eine erhöhte relative Luftfeuchtigkeit auf das Behältnis einwirkt, diffundiert Wasser in das Innere des Behältnisses und kommt in Kontakt mit dem Indikator. Die Anwesenheit dieser erhöhten Luftfeuchte/Wasser über einen längeren Zeitraum kann durch die Farbänderung des Indikatorstreifens, zum Beispiel von blau nach rot angezeigt werden. Bestimmte Metallsalze wechseln beim Übergang vom wasserfreien in den wasserhaltigen Zustand die Farbe. Kieselgel kann Substanzen zugemischt werden, die die gewünschte Farbänderung zeigen.

Zur Visualisierung und Dokumentation der maximalen auf die Holzwerkstoffplatte eingewirkten Temperatur kann ein Temperaturmessstreifen verwendet werden, der vorzugsweise an der Unterseite der Holzwerkstoffplatte angeordnet ist und die maximal aufgetretene Temperatur anzeigt. Es ist dann erkennbar, ob die Holzwerkstoffplatte unter Umständen einer zu hohen Temperatur ausgesetzt gewesen ist, die ihre Eigenschaften durch Austrocknen negativ verändert haben kann. Es kann sich natürlich auch um eine Kombination aus hoher Temperatur und Feuchte handeln.

Die Folien zur Visualisierung der Kräfte/Drücke können gegebenenfalls auch zusätzlich zu dem die Feuchtigkeit anzeigenden Indikator in dem Polyethylenbeutel aufgenommen werden. Auch der Temperaturmessstreifen kann in dem Behältnis aufgenommen sein, sodass der Maximalwert aller drei erfolgten Zustandsänderungen visualisiert wird.

Bei Waren, die über längere Zeit, insbesondere auf dem Seeweg in Containern transportiert werden, ist es üblich, den Container zu begasen, um Schädlingsbefall zu vermeiden. Häufig verwendete Gase wie Phosphin, Methylbromid und/oder Sulfuryldifluorid sind schwerer als Luft und setzen sich am Boden des Containers ab.

Vorzugsweise kann auch zur Ermittlung einer eingewirkten Begasung mindestens ein, insbesondere vorzugsweise streifenförmiger, Indikator vorgesehen sein, der beispielsweise auf die üblicherweise Verwendung findenden Gase Phosphin, Methylbromid und/oder Sulfuryldifluorid reagiert. Dabei verändert der Indikator weiterhin insbesondere vorzugsweise nach Überschreiten einer definierten Größe der Belastung seine Farbe. Auf jeden Fall weist der Indikator nach der erfolgten Zustandsänderung eine farbliche Abweichung bezogen auf seinen Ausgangszustand auf. Die farbliche Abweichung variiert insbesondere vorzugsweise mit der Intensität der erfolgten Zustandsänderung. Zur Indikation einer Begasung mit unterschiedlichen Gasen wird bevorzugt für jedes mögliche Gas eine andere Farbe verwendet.

Denkbar ist es auch, dass als Indikatoren Chemikalien vorgesehen sind, die über eine einfache Farbreaktion eine Ja/Nein-Aussage zulassen. Dies ist genügend. Beispielsweise entsteht bei der Hydrolyse von Sulfurylfluorid Flusssäure, die durch einen Farbumschlag (beispielsweise mit Lackmus) erkennbar gemacht werden kann.

Die Holzwerkstoffplatte ist vorzugsweise ein Paneel, insbesondere ein Wand-, Decken- oder Fußbodenpaneel oder eine Möbelplatte.

Bei einem aus einer Mehrzahl von Paneelen derselben Art bestehenden Gebinde ist vorzugsweise mindestens ein Paneel mit mindestens einem der vorbeschriebenen Indikatoren ausgerüstet. Um insbesondere eine sichere Anzeige einer Krafteinwirkung (Druckbelastung) auf das Gebinde nachweisen zu können, wird das mindestens eine mit dem Indikator ausgerüstete Paneel im unteren Bereich des Gebindes lokalisiert. Bezogen auf den Lebenszyklus eines Produktes lassen sich dann auch Reklamationen sicher handhaben, weil nicht nur die Zustandsänderung an sich, sondern auch ihr Zeitpunkt ermittelbar ist, sodass ein Auftreten des Fehlerbilds in einen direkten Kontext zu einer Zustandsänderung gebracht werden kann.

Es kann ein Indikatorfeld auf der Unterseite mindestens eines Paneels vorgesehen werden, dass eine Mehrzahl verschiedener Indikatoren aufweist. Es können alle vorbeschriebenen Indikatoren kumulativ in diesem Indikatorfeld verwendet werden.

Die Paneele oder die Möbelplatte, weisen vorzugsweise wenigstens auf der die Oberseite ein Dekor, insbesondere ein Holzdekor, und weiterhin insbesondere vorzugsweise eine Versieglung und eine Oberflächenstruktur auf. Das Dekor und die Oberflächenstruktur sind wenigstens abschnittsweise aneinander angepasst ausgeführt. In diesem Fall sind vorzugsweise die sich gegenüberliegenden Seitenkanten mit einer kongruenten Profilierung ausgebildet, über die jeweils zwei Paneele leimlos miteinander verbindbar sind. Diese Paneele lassen sich dann auch im Heimwerkerbereich einfach einsetzen.

Wenn die Holzwerkstoffplatte eine Möbelplatte ist, werden vorzugsweise die Oberseite und die Unterseite dekoriert, versiegelt und strukturiert. Das Dekor und die Oberflächenstruktur auf der Oberseite und/oder auf der Unterseite sind insbesondere vorzugsweise wenigstens abschnittsweise aneinander angepasst.

Ergänzend sei noch erwähnt, dass es aus der DE 201 03 745 U1 bekannt ist, bei einem zumindest teilweise aus Holz oder Holzwerkstoff bestehenden Bauteil auf der Oberfläche einen optischen Feuchteindikator zu befestigen, der den Abschluss eines in das Bauteil eingeführten Röhrchens bildet, das mit seinem offenen, den Feuchteindikator gegenüberliegenden inneren Ende in den hinsichtlich seiner Feuchte zu überwachenden Bauteilbereich hineinragt.

Aus der DE 693 03 368 T2 ist ein Indikatorband und ein Verfahren zu seiner Herstellung bekannt, mit dem angezeigt werden kann, dass ein bestimmter Packungsinhalt sterilisiert wurde.

In der EP 1 975 609 A1 sind Verfahren für die Prognostizierung der Formänderungen bzw. der Formstabilität von Holzprodukten angegeben, die auf einer Differenzialbetrachtung beruhen.

Denkbar ist es auch, das Gebinde, zu dem eine Mehrzahl von in einzelne Kartons eingelegte Paneele mit einer wenigstens teilweise umhüllenden Verpackung zusammengefasst werden, mit mindestens einem der vorbeschriebenen Indikatoren auszurüsten. Dieser Indikator ist dann an einer der Außenseiten, insbesondere einer sofort sichtbaren Seite angebracht. Beispielsweise kann mit einem Indikator, der eine erfolgte Begasung des Containers sichtbar macht, dann sofort beim Öffnen des Containers erkannt werden, ob eine Begasung erfolgt ist, ob die Begasung möglicherweise zu hoch war und mit welcher Art Gas die Begasung erfolgt ist, sodass gegebenenfalls Sicherungsmaßnahmen ergriffen werden können, um die Personen, die den Container entladen, zu schützen. Auch wenn kein Indikator am Gebinde vorgesehen ist, kann für den Fall, dass bei dem Personal nach dem Entladen des Containers gesundheitliche Probleme auftreten, mit Hilfe des an dem Paneel vorgesehenen Indikators eine Kontamination nachgewiesen werden. Es können dann geeignete Behandlungsmaßnahmen durchgeführt werden.

Durch die Visualisierung einer Zustandsänderung können die Produkte direkt nach einer Lieferung bereits in der Wareneingangskontrolle sicher überprüft und eine Entscheidung getroffen werden, ob die Lieferung qualitativ akzeptiert wird. Auch der Endkunde könnte nach dem Kauf nochmals eine Überprüfung der Ware vornehmen. Hierzu könnte an der Verpackung ein Vergleichsfeld mit einem entsprechenden Hinweis für den Kunden angebracht werden, damit er die Überprüfung vornehmen kann. Hierzu kann auf einer das Gebinde wenigstens teilweise umhüllenden Verpackung ein Hinweis auf den Indikator an dem mindestens einen Paneel oder der mindestens einen Möbelplatte angebracht werden. Auch kann auf jedem einzelnen Karton, in den die Paneele eingelegt sind, ein entsprechender Hinweis aufgedruckt sein.

Wenn der Indikator von der Holzwerkstoffplatte nicht entfernt wird, kann eine Überprüfung auch später noch in einer Verlegesituation beim Endkunden durch einen Händler oder den Hersteller erfolgen. Dadurch wird eine Möglichkeit geschaffen, sowohl das einzelne Paneel als auch gegebenenfalls den Verbund aus mehreren Paneelen qualitativ zu beurteilen. Dadurch kann einfach die Ursache für etwaige Reklamationen festgestellt werden. Bei einer Reklamation kann beispielsweise festgestellt werden, ob der Fußbodenbelag gegebenenfalls partiell einer zu hohen Belastung ausgesetzt gewesen ist, beispielsweise zu feucht geworden ist.

Die Überprüfung der Ware kann in jeder Vertriebsstufe sicher vorgenommen werden. Unsachgemäße Behandlung und/oder Lagerung ist damit sicher erkennbar.

Die vorbeschriebenen Merkmale sind in der beigefügten Zeichnung schematisch dargestellt. Es zeigen:
- Figur 1 -: die Draufsicht auf die Unterseite eines Paneels,
- Figur 2 -: den Schnitt entlang der Linie II-II nach Figur 1,
- Figur 3 -: die Draufsicht auf die Oberseite des Paneels,
- Figur 4 -: die vergrößerte Einzelheit gemäß Sichtpfeil IV nach Figur 2,
- Figur 5 -: die Darstellung eines Kraftindikators.

Das Paneel 1 (oder die Holzwerkstoffplatte bzw. Möbelplatte 1) weist eine Unterseite 1 a und einer Oberseite 1 b auf. Auf der Oberseite 1 b ist ein Dekor 4 und eine das Dekor 4 abdeckende Versiegelungsschicht 12 vorgesehen. In die Versiegelungsschicht 12 ist eine Struktur 3 eingeprägt, die vorzugsweise zu dem Dekor 4 kongruent ist, um damit den natürlichen Eindruck des Dekores 4, das vorzugsweise ein Holzdekor ist, zu verstärken.

An der Unterseite 1a ist ein Indikator 2 zur Visualisierung einer erfolgten Veränderung einer bestimmten auf die Holzwerkstoffplatte 1 einwirkenden physikalischen Einflussgröße angebracht. Die physikalische Einflussgröße ist der Druck oder eine mechanische auf die Holzwerkstoffplatte 1 eingewirkte Belastung. Der Indikator 2 ist auf die Unterseite 1 a aufgeklebt oder in einen in die Unterseite 1 a integrierten Behälter 9 eingebracht. An sich gegenüberliegenden Seitenkanten 5, 6, 7, 8 ist das Paneel 1 mit einer kongruenten Profilierung versehen, wie diese beispielsweise in der DE 100 08 166 C2 beschrieben ist, um eine Mehrzahl Paneele 1 leimlos miteinander verbinden, verriegeln und zu einem Verbund verlegen zu können.

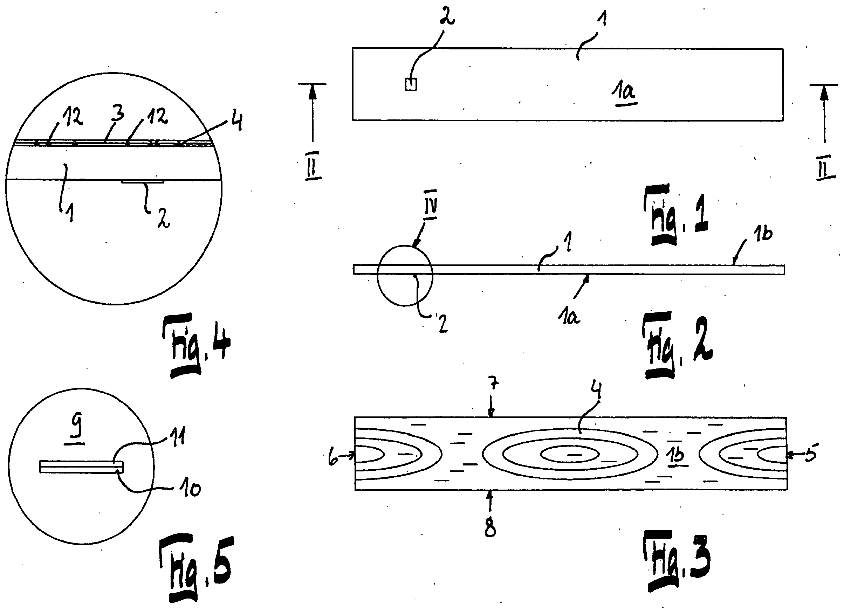

Aus Figur 5 ist ersichtlich, wie die Metallfolie 10 und die lackierte Folie 11 übereinanderliegend aufgenommen sind.

### Bezugszeichenliste

- 1: Paneel/Möbelplatte/Holzwerkstoffplatte
- 1a: Unterseite
- 1b: Oberseite
- 2: Indikator
- 3: Struktur
- 4: Dekor
- 5: Seitenkante
- 6: Seitenkante
- 7: Seitenkante
- 8: Seitenkante
- 9: Behälter
- 10: Metallfolie
- 11: lackierte Folie
- 12: Versiegelungsschicht

## Patentansprüche

1. Holzwerkstoffplatte (1) mit einer Oberseite (1b), einer Unterseite (1a) und Seitenkanten (5, 6, 7, 8), **gekennzeichnet durch** mindestens einen an der Unterseite (1a) angebrachten Indikator (2) zur Visualisierung einer erfolgten Zustandsänderung der Holzwerkstoffplatte (1) unter Einwirkung wenigstens einer mechanischen Kraft, der **durch** eine an der Unterseite (1a) der Holzwerkstoffplatte (1) angeordnete strukturierte Metallfolie (10) und eine lackierte Folie (11) gebildet wird, die aufeinander liegend angeordnet sind.

2. Holzwerkstoffplatte (1) nach Anspruch 1, **dadurch gekennzeichnet, dass** sich die Struktur der Metallfolie (10) in den Lack der darüber liegenden Folie (11) einprägt, wenn die auf die Holzwerkstoffplatte (1) einwirkenden Kräfte (Drücke) zu hoch werden.

3. Holzwerkstoffplatte (1) nach Anspruch 2, **dadurch gekennzeichnet, dass** durch die gewählte Härte des Lackes der Folie (11) auf die Holzwerkstoffplatte (1) einwirkende Kräfte bzw. Drücke in einer bestimmten Höhe toleriert werden, ohne dass die Strukturen der Metallfolie (10) in den Lack gepresst werden.

4. Holzwerkstoffplatte (1) nach einem der vorstehenden Ansprüche, **dadurch gekennzeichnet, dass** die Folien (10, 11) in einem Behältnis (9) aufgenommen sind.

5. Holzwerkstoffplatte (1) nach Anspruch 4, **dadurch gekennzeichnet, dass** das Behältnis (9) aus einem biegeschlaffen Material besteht.

6. Holzwerkstoffplatte (1) nach Anspruch 5, **dadurch gekennzeichnet, dass** das Behältnis (9) ein Kunststoffbeutel, insbesondere ein Polyethylenbeutel ist.

7. Holzwerkstoffplatte (1) nach einem der vorstehenden Ansprüche, **dadurch gekennzeichnet, dass** zusätzlich ein an der Holzwerkstoffplatte (1) angebrachter Indikator (2) zur Visualisierung einer Zustandsänderung der Holzwerkstoffplatte (1) durch Feuchtigkeitseinwirkung, durch Temperatureinwirkung und/oder eine Begasung der Umgebung der Holzwerkstoffplatte (1) vorgesehen ist.

8. Holzwerkstoffplatte (1) nach Anspruch 7, **dadurch gekennzeichnet, dass** der zusätzliche Indikator (2) nach der erfolgten Zustandsänderung eine farbliche Abweichung, bezogen auf seinen Ausgangszustand, aufweist.

9. Holzwerkstoffplatte (1) nach Anspruch 8, **dadurch gekennzeichnet, dass** die farbliche Abweichung mit der Intensität der erfolgten Zustandsänderung variiert.

10. Holzwerkstoffplatte (1) nach einem der vorhergehenden Ansprüche, **dadurch gekennzeichnet, dass** die Holzwerkstoffplatte als Wand-, Decken- oder Fußbodenpaneel oder als Möbelplatte ausgestaltet ist und auf wenigstens der Oberseite (1b) ein Dekor (4), wenigstens eine Versiegelung und eine Oberflächenstruktur aufweist.

11. Holzwerkstoffplatte (1) nach Anspruch 10, **dadurch gekennzeichnet, dass** das Dekor (4) und die Oberflächenstruktur wenigstens abschnittsweise aneinander angepasst ausgeführt sind.

12. Holzwerkstoffplatte (1) nach Anspruch 10, **dadurch gekennzeichnet, dass** das Wand-, Decken- oder Fußbodenpaneel an den Seitenkanten (5, 6, 7, 8) mit aufeinander abgestimmten Verbindungsprofilen zur Verlegung in einem Verbund ausgestattet ist.

13. Holzwerkstoffplatte (1) nach Anspruch 10, **dadurch gekennzeichnet, dass** die Oberseite (1b) und die Unterseite (1 a) der Möbelplatte dekoriert, versiegelt und strukturiert ist und Dekor- und Oberflächenstruktur auf der Oberseite (1b) und/oder auf der Unterseite (1a) wenigstens abschnittsweise aneinander angepasst ausgeführt sind.

14. Gebinde bestehend aus einer Mehrzahl von Paneelen oder Platten derselben Art, **gekennzeichnet durch** wenigstens ein Paneel (1) oder eine Platte (1) in dem Gebinde, das mit wenigstens einem Indikator (2) nach einem der Ansprüche 1 bis 9 ausgestattet ist.

15. Gebinde nach Anspruch 14, **gekennzeichnet durch** eine das Gebinde wenigstens teilweise umhüllende Verpackung, die wenigstens einen Hinweis auf einen Indikator (2) an dem mindestens einen Paneel (1) oder der mindestens einen Platte (1) aufweist.

## Claims

1. Composite wood board (1) having an upper side (1 b), a lower side (1 a) and side edges (5, 6, 7, 8), **characterized by** at least one indicator (2) applied to the underside (1 a) to visualize a state change in the composite wood board (1) that has taken place under the action of at least one mechanical force, film (10) and a lacquered film (11) which are arranged on the underside (1 a) of the composite wood board (1) and are arranged lying on each other.

2. Composite wood board (1) according to Claim 1, **characterized in that** the structure of the metal film (10) is impressed into the lacquer of the film (11) lying above when the forces (pressures) acting on the composite wood board (1) become too high.

3. Composite wood board (1) according to Claim 2, **characterized in that** by means of the selected hardness of the lacquer of the film (11), forces or pressures acting on the composite wood board (1) at a certain level are tolerated without the structures of the metal film (10) being pressed into the lacquer.

4. Composite wood board (1) according to one of the preceding claims, **characterized in that** the films (10, 11) are accommodated in a container (9).

5. Composite wood board (1) according to Claim 4, **characterized in that** the container (9) consists of a flexible material.

6. Composite wood board (1) according to Claim 5, **characterized in that** the container (9) is a plastic bag, in particular a polythene bag.

7. Composite wood board (1) according to one of the preceding claims, **characterized in that** in addition an indicator (2) attached to the composite wood board (1) is provided for visualizing a state change of the composite wood board (1) as a result of the action of moisture, as a result of the action of temperature and/or gasification of the surroundings of the composite wood board (1).

8. Composite wood board (1) according to Claim 7, **characterized in that** after the state change has taken place, the additional indicator (2) exhibits a colour deviation, based on its initial state.

9. Composite wood board (1) according to Claim 8, **characterized in that** the colour deviation varies with the intensity of the state change that has taken place.

10. Composite wood board (1) according to one of the preceding claims, **characterized in that** the composite wood board is configured as a wall, ceiling or flooring panel or as a furniture panel and has a decoration (4), at least one seal and a surface structure on at least the upper side (1b).

11. Composite wood board (1) according to Claim 10, **characterized in that** the decoration (4) and the surface structure are implemented so as to be co-ordinated with each other, at least in some sections.

12. Composite wood board (1) according to Claim 10, **characterized in that** the wall, ceiling or flooring panel is equipped on the side edges (5, 6, 7, 8) with connecting profiles matched to one another for laying in a combination.

13. Composite wood board (1) according to Claim 10, **characterized in that** the upper side (1 b) and the underside (1 a) of the furniture board are decorated, sealed and structured and the decorative and surface structure on the upper side (1 b) and/or on the underside (1 a) are implemented so as to be co-ordinated with each another, at least in some sections.

14. Bundle consisting of a plurality of panels or boards of the same type, **characterized by** at least one panel (1) or one board (1) in the bundle which is equipped with at least one indicator (2) according to one of Claims 1 to 9.

15. Bundle according to Claim 14, **characterized by** packaging at least partly enveloping the bundle, which has at least one reference to an indicator (2) on the at least one panel (1) or the at least one board (1).

## Revendications

1. Plaque en matériau à base de bois (1) comprenant une face supérieure (1 b), une face inférieure (1 a) et des bords latéraux (5, 6, 7, 8), **caractérisée par** au moins un indicateur (2) appliqué sur la face inférieure (1 a) pour visualiser un changement d'état de la plaque en matériau à base de bois (1) intervenu sous l'effet d'au moins une force mécanique, l'indicateur étant formé par une feuille métallique (10) structurée agencée sur la face inférieure (1 a) de la plaque en matériau à base de bois (1) et une feuille vernie (11), qui sont agencées couchées l'une sur l'autre.

2. Plaque en matériau à base de bois (1) selon la revendication 1, **caractérisée en ce que** la structure de la feuille métallique (10) s'incruste dans le vernis de la feuille (11) couchée sur elle, lorsque les forces (pressions) s'exerçant sur la plaque en matériau à base de bois (1) deviennent trop importantes.

3. Plaque en matériau à base de bois (1) selon la revendication 2, **caractérisée en ce que**, par la dureté choisie du vernis de la feuille (11) les forces, respectivement les pressions, exercées sur la plaque en matériau à base de bois sont tolérées d'un niveau déterminé, sans que les structures de la feuille (10) soient pressées dans le vernis.

4. Plaque en matériau à base de bois (1) selon l'une des revendications précédentes, **caractérisée en ce que** les feuilles (10, 11) sont reçues dans un récipient (9).

5. Plaque en matériau à base de bois (1) selon la revendication 4, **caractérisée en ce que** le récipient (9) est constitué d'un matériau souple en flexion.

6. Plaque en matériau à base de bois (1) selon la revendication 5, **caractérisée en ce que** le récipient (9) est une poche en plastique, en particulier une poche en polyéthylène.

7. Plaque en matériau à base de bois (1) selon l'une des revendications précédentes, **caractérisée en ce qu'**il est en outre prévu un indicateur (2) appliqué sur la plaque en matériau à base de bois (1) pour visualiser un changement d'état de la plaque en matériau à base de bois (1) sous l'effet d'humidité, de température, et/ou un enfumage de l'environnement de la plaque en matériau à base de bois (1).

8. Plaque en matériau à base de bois (1) selon la revendication 7, **caractérisée en ce que** l'indicateur supplémentaire (2) présente, après le changement d'état intervenu, un écart de couleur par rapport à son état initial.

9. Plaque en matériau à base de bois (1) selon la revendication 8, **caractérisée en ce que** l'écart de couleur varie avec l'intensité du changement d'état intervenu.

10. Plaque en matériau à base de bois (1) selon l'une des revendications précédentes, **caractérisée en ce que** la plaque en matériau à base de bois est conçue comme un panneau de paroi, de plafond ou de plancher ou comme une plaque de meuble et comprend un décor (4), au moins une couche de vitrification et une structure de surface, sur au moins la face supérieure (1 b).

11. Plaque en matériau à base de bois (1) selon la revendication 10, **caractérisée en ce que** le décor (4) et la structure de surface sont réalisés ajustés l'un à l'autre au moins par endroits.

12. Plaque en matériau à base de bois (1) selon la revendication 10, **caractérisée en ce que** le panneau de paroi, de plafond ou de plancher est réalisé sur les bords latéraux (5, 6, 7, 8) avec des profils de liaison adaptés l'un à l'autre pour la pose en un ensemble.

13. Plaque en matériau à base de bois (1) selon la revendication 10, **caractérisée en ce que** la face supérieure (1b) et la face inférieure (1a) de la plaque de meuble sont décorées, vitrifiées et structurées et la structure de surface et la structure de décor sont réalisées ajustées l'une à l'autre au moins par endroits sur la face supérieure (1 b) et/ou sur la face inférieure (1a).

14. Lot comportant plusieurs panneaux ou plaques du même type, **caractérisé par** au moins un panneau (1) ou une plaque (1) dans le lot qui est réalisé avec au moins un indicateur (2) selon l'une des revendications 1 à 9.

15. Lot selon la revendication 14, **caractérisé par** au moins un emballage enveloppant au moins partiellement le lot, l'emballage présentant au moins un avis signalant un indicateur (2) sur l'au moins un panneau (1) ou l'au moins une plaque (1).
